Europäisches Patentamt

European Patent Office

Office européen des brevets

(11) Veröffentlichungsnummer: **0 317 706 B1**

(12) **EUROPÄISCHE PATENTSCHRIFT**

(45) Veröffentlichungstag der Patentschrift: **11.11.92**

(21) Anmeldenummer: **88111833.5**

(22) Anmeldetag: **22.07.88**

(51) Int. Cl.⁵: **B01D 53/36**

(54) **Rauchgaskanal zur Behandlung eines Rauchgases.**

(30) Priorität: **27.10.87 DE 3736306**

(43) Veröffentlichungstag der Anmeldung:
**31.05.89 Patentblatt 89/22**

(45) Bekanntmachung des Hinweises auf die
Patenterteilung:
**11.11.92 Patentblatt 92/46**

(84) Benannte Vertragsstaaten:
**AT BE CH DE ES FR GB GR IT LI LU NL SE**

(56) Entgegenhaltungen:
**DE-A- 2 733 356**
**DE-U- 8 612 710**
**DE-U- 8 803 103**
**JP-A-58 119 326**

**Energie Spektrum, Juni 1987, J. Becker, S.
25-48**

(73) Patentinhaber: **DEUTSCHE ENGINEERING der
VOEST-ALPINE INDUSTRIEANLAGENBAU Gesellschaft mit beschränkter Haftung**
**Alfredstr. 28**
**W-4300 Essen 1(DE)**

Patentinhaber: **DIDIER-WERKE AG**
**Lessingstrasse 16-18**

**W-6200 Wiesbaden(DE)**

(72) Erfinder: **Flockenhaus, Claus, Prof. Dr.**
**Tersteegenweg 16**
**W-4300 Essen(DE)**
Erfinder: **Galow, Manfred**
**Vosselerweg 2**
**W-4300 Essen 12(DE)**
Erfinder: **Merkel, Klaus**
**Schönscheidtstrasse 8**
**W-4300 Essen 13(DE)**
Erfinder: **Bühler, Hans-Eugen, Prof. Dr.**
**Kastanienweg 3c**
**W-6240 Königstein 3(DE)**
Erfinder: **Kainer, Hartmut, Dr.**
**Am Güldenplan 26**
**W-6200 Wiesbaden(DE)**

(74) Vertreter: **Brückner, Raimund**
**c/o Didier-Werke AG Hauptverw./Patentabt.**
**Postfach 2025 Lessingstrasse 16-18**
**W-6200 Wiesbaden(DE)**

## Beschreibung

Die Erfindung betrifft einen Rauchgaskanal zur Behandlung eines Rauchgases, insbesondere zur Reduktion von Stickoxiden, der eine Vielzahl von Verteilerrohren mit Düsenöffnungen zum Eindüsen eines Reduktionsmittels, inbesondere Ammoniak, aufweist, wobei die Verteilerrohre in Querschnittsebenen des Rauchgaskanals verteilt und über je ein Stellventil mit Zuleitungen verbunden sind, und jedes Verteilerrohr aus wenigstens zwei parallelen Rohrstücken besteht, die an dasselbe Stellventil angeschlossen sind.

Ein derartiger Rauchgaskanal ist in der JP-A-58119326 beschrieben. Die Verteilerrohre erstrekken sich hier von einer Seite des Rauchgaskanals ausgehend über dessen gesamten Querschnitt, wobei sie auch in einzelne, separat mit Reduktionsmittel versorgbare Abschnitte unterteilt sein können. Durch diese bekannte Vorrichtung wird eine "linienförmige" Differenzierung der Reduktionsmittelzugaben ermöglicht, um so ungleichmäßige Verteilungen der Stickoxidkonzentrationen auszugleichen.

Es hat sich nämlich gezeigt, daß beim Betrieb eines Rauchgaskanals die Stickoxide im Rauchgas nicht gleichmäßig verteilt sind, sondern über den Querschnitt des Rauchgaskanals gesehen ungleiche Stickoxid-Konzentrationen vorliegen. Wird das Reduktionsmittel bei solchen "Schieflagen" der Konzentration der Stickoxide gleichmäßig eingedüst, dann tritt eine ungleiche Katalysatorwirkung auf, da nicht in allen Bereichen einem Mol Stickoxid ein Mol Reduktionsmittel zugeordnet ist.

Durch den bekannten Rauchgaskanal kann den $NO_x$-Konzentrationsunterschieden jedoch nur insoweit gut Rechnung getragen werden, soweit die Zonen unterschiedlicher Konzentration "linienförmig" und in der gleichen Richtung verlaufen wie die Verteilerrohre. Es kommt jedoch vor, daß die Konzentrationsunterschiede vollkommen unregelmäßig über den Kanalquerschnitt verteilt sind.

Aufgabe der Erfindung ist es nun, einen Rauchgaskanal der eingangs genannten Art vorzuschlagen, bei dem bei im Querschnitt des Rauchgaskanals zonal unterschiedlicher Rauchgas-, insbesondere Stickoxid-Konzentration, entspechend unterschiedliche Konzentrationen des Reduktionsmittels, insbesondere Ammoniaks, individuell besser einstellbar sind.

Erfindungsgemäß ist obige Aufgabe bei einem Rauchgaskanal der eingangs genannten Art dadurch gelöst, daß die Verteilerrohre von den gegenüberliegenden Seiten des Rauchgaskanals jeweils bis zu dessen Mitte reichen, und daß die in einer Querschnittsebene des Rauchgaskanals verlaufenden Verteilerrohre die in einer benachbarten Querschnittsebene verlaufenden Verteilerrohre kreuzen.

Dadurch ist erreicht, daß nicht nur "linienförmige", in eine Richtung verlaufende Zonen des Rauchgaskanals individuell mit Reduktionsmittel beaufschlagt werden können, sondern sich durch eine entsprechende Einstellung der Stellventile die Verteilung des Reduktionsmittels an unregelmäßige Konzentrationsunterschiede des Rauchgases besser anpassen läßt.

In Ausgestaltung der Erfindung weisen die Rohrstücke Düsenöffnungen auf, die in Strömungsrichtung des Rauchgases ausgerichtet sind und weitere Düsenöffnungen auf, die im spitzen Winkel zur Strömungsrichtung ausgerichtet sind, um zwischen den Rohrstücken eine möglichst weitgehende Überdeckung des Strömungsquerschnitts zu erreichen.

Weitere vorteilhafte Ausgestaltungen der Erfindung ergeben sich aus den Unteransprüchen und der folgenden Beschreibung eines Ausführungsbeispiels. In der Zeichnung zeigen:

Figur 1    einen Querschnitt eines Rauchgaskanals, schematisch,
Figur 2    eine vergrößerte Teilansicht eines Verteilerrohrs,
Figur 3    einen Schnitt längs der Linie III-III nach Figur 2, und
Figur 4    einen Schnitt längs der Linie IV-IV nach Figur 2.

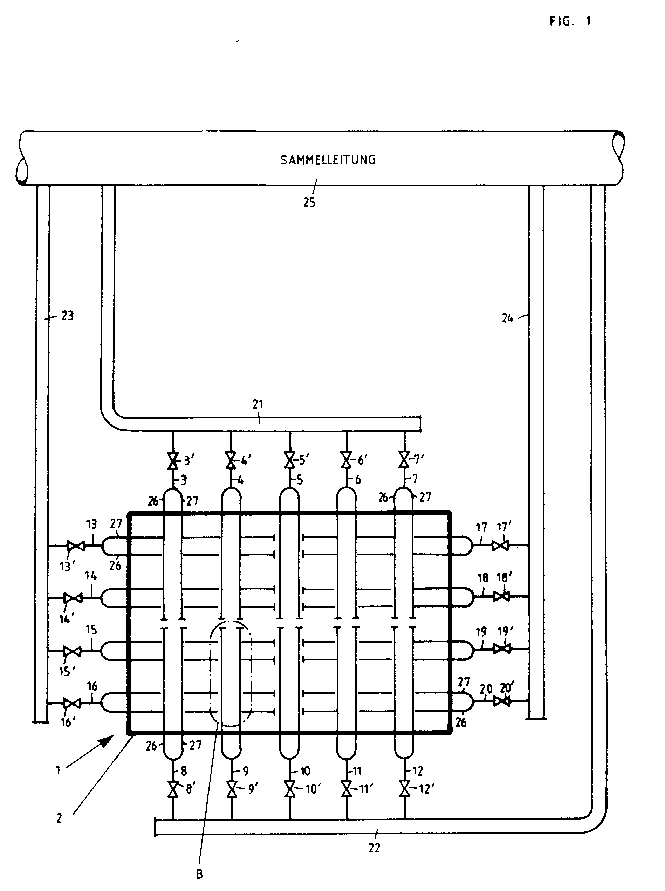

Ein Rauchgaskanal 1 ist vor einem Reaktor angeordnet, in dem Rauchgase mit Hilfe eines Katalysators und unter Zusatz eines $NH_3$/Luftgemisches entstickt werden. Der Rauchgaskanal 1 ist mit einem Mantel 2 versehen. In dem Rauchgaskanal 1 sind in einer Ebene verlaufende Verteilerrohre 3 bis 12 angeordnet. In einer parallelen Querschnittsebene - unterhalb der Zeichnungsebene der Figur 1 - verlaufen Verteilerrohre 13 bis 20. Jedes Verteilerrohr 3 bis 20 ist über ein eigenes Stellventil 3' bis 20' an eine Zuleitung 21, 22, 23 bzw. 24 angeschlossen. Die Zuleitungen ihrerseits sind mit einer Sammelleitung 25 verbunden.

Jedes Verteilerrohr 3 bis 20 weist zwei in der jeweiligen Querschnittsebene zueinander parallel verlaufende Rohrstücke 26, 27 auf. Die Rohrstücke 26, 27 zweigen gabelförmig vom betreffenden Stellventil ab, so daß die Verteilerrohre insgesamt gabelförmig gestaltet sind. Beim Ausführungsbeispiel weist jedes Verteilerrohr zwei parallele Rohrstücke 26, 27 auf. Es ist jedoch auch möglich, jedes Verteilerrohr durch drei oder mehr parallele Rohrstücke zu bilden. Insbesondere können in aufeinanderfolgenden Querschnittsebenen Verteilerrohre angeordnet sein, die aus verschieden vielen Rohrstücken bestehen. Es können dann in der jeweils folgenden Querschnittsebene Verteilerrohre angeordnet sein, die jeweils ein Rohrstück mehr aufweisen, als die Verteilerrohre der vorhergehenden Querschnittsebene.

Die Rohrstücke 26, 27 der Verteilerrohre 3 bis 12 reichen jeweils bis zur Mitte des Rauchgaskanals 1, wobei die Rohrstücke der Verteilerrohre 3 bis 7 paarweise mit den Rohrstücken der Verteilerrohre 8 bis 12 fluchten. Entsprechendes gilt für die Verteilerrohre 13 bis 20 der benachbarten Querschnittsebene.

Die Rohrstücke 26, 27 der Verteilerrohre 3 bis 12 und die Rohrstücke 26, 27 der Verteilerrohre 13 bis 20 sind so angeordnet, daß sich die Rohrstücke der einen Ebene mit den Rohrstücken der anderen Ebene kreuzen (vgl. Figur 1).

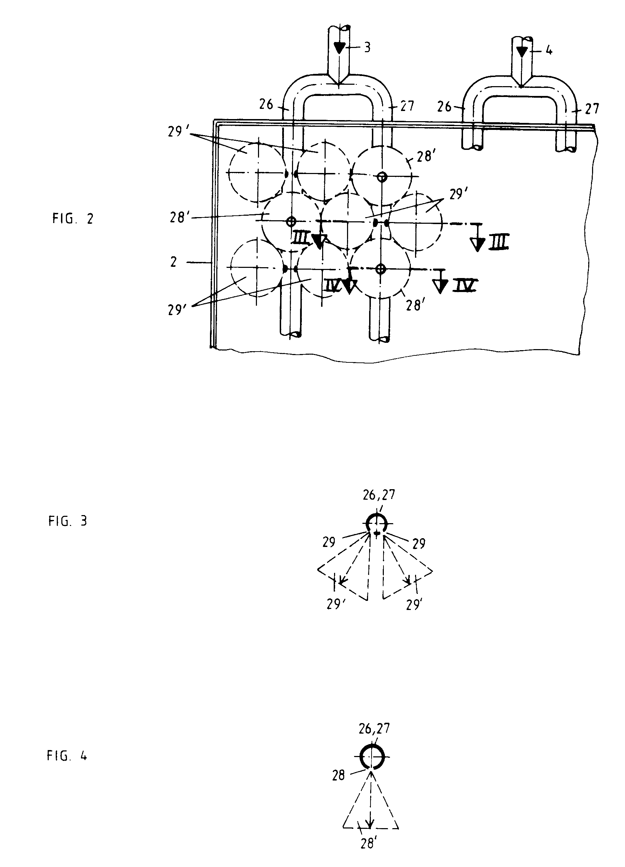

Die Rohrstücke 26, 27 weisen Düsenöffnungen 28 auf, die in Strömungsrichtung des durch den Rauchgaskanal zu leitenden Rauchgases ausgerichtet sind. Außerdem sind die Rohrstücke 26, 27 zwischen den Düsenöffnungen 28 mit Paaren von Düsenöffnungen 29 versehen, die im spitzen Winkel zur Strömungsrichtung ausgerichtet sind. Die Düsenöffnungen 28 des Rohrstücks 26 sind auf Lücke zu den Düsenöffnungen 28 des Rohrstücks 27 versetzt Gleiches gilt für die Paare von Düsenöffnungen 29 (vgl. Figur 2). An den Düsenöffnungen 28 entstehen Düsenkegel 28' (vgl. Figur 4). An den Düsenöffnungen 29 entstehen Düsenkegel 29' (vgl. Figur 3). Der Abstand der Rohrstücke 26, 27 ist so bemessen, daß die Düsenkegel 28', 29' insgesamt den Raum zwischen den Rohrstücken 26, 27 und den neben den Rohrstücken verlaufenden Raum gleichmäßig und weitgehend vollständig abdecken. Damit ist erreicht, daß im Betrieb jedes Verteilerrohres 3 bis 20 durch seine Rohrstücke 26, 27 eine breite, streifenförmige Zone mit Reduktionsmittel abdeckt. Die Zonen der Verteilerrohre 3 bis 12 bzw. 1.3 bis 20 schließen dicht aneinander an.

Die Funktionsweise des beschriebenen Rauchgaskanals ist etwa folgende:

Wird der Rauchgaskanal 1 von Rauchgas mit über den Querschnitt gleichmäßiger Stickoxidkonzentration durchströmt, dann werden alle Stellventile 3' bis 20' gleich weit geöffnet, so daß dementsprechend eine gleichmäßig verteilte Ammoniakeindüsung entsteht.

Tritt beispielsweise im Querschnittsbereich B eine erhöhte Stickoxidkonzentration auf, dann werden die Stellventile 9', 15', 16' weiter geöffnet, so daß über die Verteilerrohre 9, 15, 16 eine verstärkte Eindüsung von Ammoniak stattfindet. Diese deckt sich im wesentlichen mit dem Bereich B.

Dadurch, daß die Rohrstücke 26, 27 jedes Verteilerrohres 3 bis 20 nur bis zur Mitte des Rauchgaskanals reichen und sich kreuzen, ist durch eine entsprechende Einstellung der Stellventile 3' bis 20' eine gute Anpassung verstärkter Ammoniakeindüsung an die jeweiligen Konzentrationswolken des Stickoxids möglich.

**Patentansprüche**

1. Rauchgaskanal (1) zur Behandlung eines Rauchgases, insbesondere zur Reduktion von Stickoxiden, der eine Vielzahl von Verteilerrohren (3 bis 20) mit Düsenöffnungen (28, 29) zum Eindüsen eines Reduktionsmittels, insbesondere Ammoniak, aufweist, wobei die Verteilerrohre (3 bis 20) in Querschnittsebenen des Rauchgaskanals (1) verteilt und über je ein Stellventil (3' bis 20') mit Zuleitungen (21 bis 24) verbunden sind, und jedes Verteilerrohr (3 bis 20) aus wenigstens zwei parallelen Rohrstücken (26, 27) besteht, die an dasselbe Stellventil (3' bis 20') angeschlossen sind, dadurch gekennzeichnet, daß die Verteilerrohre (3 bis 20) von den gegenüberliegenden Seiten des Rauchgaskanals (1) jeweils bis zu dessen Mitte reichen, und daß die in einer Querschnittsebene des Rauchgaskanals (1) verlaufenden Verteilerrohre (3 bis 12) die in einer benachbarten Querschnittsebene verlaufenden Verteilerrohre (13 bis 20) kreuzen.

2. Rauchgaskanal (1) nach Anspruch 1, dadurch gekennzeichnet, daß die beiden parallelen Rohrstücke (26, 27) gabelförmig vom Stellventil (3' bis 20') abzweigen.

3. Rauchgaskanal (1) nach einem der vorhergehenden Ansprüche, dadurch gekennzeichnet, daß in einer Querschnittsebene Verteilerrohre (3 bis 20) angeordnet sind, die mehr Rohrstücke aufweisen, als die Verteilerrohre einer benachbarten Querschnittsebene.

4. Rauchgaskanal (1) nach einem der vorhergehenden Ansprüche, dadurch gekennzeichnet, daß die Rohrstücke (26, 27) Düsenöffnungen (28), die in Strömungsrichtung des Rauchgases ausgerichtet sind, und weitere Düsenöffnungen (29) aufweisen, die in spitzen Winkeln zur Strömungsrichtung ausgerichtet sind.

5. Rauchgaskanal (1) nach Anspruch 4, dadurch gekennzeichnet, daß die einen Düsenöffnungen (28) und die weiteren Düsenöffnungen (29), die paarweise angeordnet sind, sich in Längsrichtung des Rohrstücks (26, 27) abwechseln.

6. Rauchgaskanal (1) nach Anspruch 4 oder 5, dadurch gekennzeichnet, daß die Düsenöffnungen (28, 29) des einen Rohrstücks (26) gegenüber den Düsenöffnungen (28, 29) des anderen Rohrstücks (27) versetzt sind.

7. Rauchgaskanal (1) nach einem der vorhergehenden Ansprüche, dadurch gekennzeichnet, daß der Abstand der Rohrstücke (26, 27) und die Anordnung deren Düsenöffnungen (28, 29) so gestaltet sind, daß zwischen den Rohrstükken (26, 27) jedes Verteilerrohrs (3 bis 20) und benachbarter Verteilerrohre eine die Abstände abdeckende Eindüsung erfolgt.

## Claims

1. Flue gas passage (1) for treating a flue gas, particularly for reducing nitrogen oxides, which has a plurality of distributor pipes (3 to 20) with jet orifices (28, 29) for injecting a reducing agent, particularly ammonia, the distributor pipes (3 to 20) being distributed in cross-sectional planes of the flue gas passage (1) and being connected to supply lines (21 to 24) via respective control valves (3' to 20') and each distributor pipe (3 to 20) comprises at least two parallel pipe portions (26, 27) which are connected to the same control valve (3' to 20'), characterised in that the distributor pipes (3 to 20) extend in each case from the opposing sides of the flue gas passage (1) into its centre and that the distributor pipes (3 to 12) extending in one cross-sectional plane of the flue gas passage (1) cross the distributor pipes (13 to 20) extending in an adjacent cross-sectional plane.

2. Flue gas passage (1) as claimed in Claim 1, characterised in that the two parallel pipe portions (26, 27) branch off from the control valve (3' to 20') in the manner of a fork.

3. Flue gas passage (1) as claimed in one of the preceding claims, characterised in that distributor pipes (3 to 20) are arranged in one cross-sectional plane which have more pipe portions than the distributor pipes of an adjacent cross-sectional plane.

4. Flue gas passage (1) as claimed in one of the preceding claims, characterised in that the pipe portions (26, 27) have jet orifices (28) which are aligned in the flow direction of the flue gas and further jet orifices (29) which are orientated at acute angles to the flow direction.

5. Flue gas passage (1) as claimed in Claim 4, characterised in that the first jet orifices (28) and the further jet orifices (29), which are arranged in pairs, alternate in the longitudinal direction of the pipe portion (26, 27).

6. Flue gas passage (1) as claimed in Claim 4 or 5, characterised in that the jet orifices (28, 29) of the one pipe portion (26) are offset with respect to the jet orifices (28, 29) of the other pipe portion (27).

7. Flue gas passage (1) as claimed in one of the preceding claims, characterised in that the spacing of the pipe portions (26, 27) and the arrangement of their jet orifices (28, 29) are such that an injection occurs which covers the spacings between the pipe portions (26, 27) of each distributor pipe (3 to 20) and of adjacent distributor pipes.

## Revendications

1. Conduit de gaz de fumée (1) pour le traitement d'un gaz de fumée, en particulier pour la réduction d'oxydes azotiques, comportant une pluralité de tubes distributeurs (3 à 20) munis d'orifices d'injection (28, 29) pour l'injection d'un agent réducteur, en particulier d'ammoniaque, les tués distributeurs (3 à 20) étant répartis dans des plans transversaux du conduit de gaz de fumée (1) et étant reliés à des conduites d'alimentation (21 à 24) par l'intermédiaire d'une vanne de réglage (3' à 20') chaque fois et chaque tube distributeur (3 à 20) étant formé d'au moins deux tronçons de tube (26, 27) parallèles qui sont connectés à la même vanne de réglage (3' à 20'), caractérisé par le fait que les tubes distributeurs (3 à 20) s'étendent à partir des côtés opposés du conduit de gaz de fumée (1) jusqu'à son milieu et que les tubes distributeurs (3 à 12) situés dans un plan transversal du conduit de gaz de fumée (1) se croisent avec les tubes distributeurs (13 à 20) situés dans un plan transversal voisin.

2. Conduit de gaz de fumée (1) selon la revendication 1, caractérisé par le fait que les deux tronçons de tube (26, 27) parallèles s'étendent en forme de fourche à partir de la vanne de réglage (3' à 20').

3. Conduit de gaz de fumée (1) selon l'une des revendications précédentes, caractérisé par le fait qu'il est prévu dans un plan transversal des tubes distributeurs (3 à 20) qui comportent un plus grand nombre de tronçons de tubes que les tubes distributeurs d'un plan transversal voisin.

4. Conduit de gaz de fumée (1) selon l'une des revendications précédentes, caractérisé par le fait que les tronçons de tube (26, 27) comportent des orifices d'injection (28) qui sont orientés dans la direction d'écoulement du gaz de fumée et d'autres orifices d'injection (29) qui forment un angle aigu par rapport à la direction d'écoulement.

5. Conduit de gaz de fumée (1) selon la revendication 4, caractérisé par le fait que les uns (28) et les autres (29) orifices qui sont disposés par paires alternent dans la direction longitudinale du tronçon de tube (26, 27).

6. Conduit de gaz de fumée (1) selon la revendication 4 ou 5, caractérisé par le fait que les orifices d'injection (28, 29) d'un tronçon de tube (26) sont décalés par rapport aux orifices d'injection (28, 29) de l'autre tronçon de tube (27).

7. Conduit de gaz de fumée (1) selon l'une des revendications précédentes, caractérisé par le fait que la distance des tronçons de tube (26, 27) et la disposition de leurs orifices d'injection (28, 29) sont telles qu'il y ait entre les tronçons de tube (26, 27) de chaque tube distributeur (3 à 20) et de tubes distributeurs voisins une injection qui couvre les distances.

EP 0 317 706 B1

FIG. 1

SAMMELLEITUNG

FIG. 2

FIG. 3

FIG. 4